# EUROPÄISCHE PATENTSCHRIFT

(11) **EP 2 335 890 B1**
(45) Veröffentlichungstag und Bekanntmachung des Hinweises auf die Patenterteilung: **16.05.2018**
(21) Anmeldenummer: 10015648.8
(22) Anmeldetag: 15.12.2010
(51) Int. Cl.: B27C 1/08, B23Q 17/24, B27M 1/08

(54) **Maschine zum Bearbeiten von Werkstücken aus Holz, Kunststoff und dergleichen, vorzugsweise Kehlmaschine, und Verfahren zum Überwachen des Transportweges von Werkstücken in einer solchen Maschine**
Machine for machining workpieces made of wood, plastic and the like, preferably moulding machine, and method for monitoring the transport path of workpieces in such a machine
Machine destinée à traiter des pièces usinées en bois, en matière synthétique et analogue, de préférence moulurière, et procédé de surveillance du parcours de transport de pièces usinées dans une telle machine

(30) Priorität: 17.12.2009 DE 102009060124
(43) Veröffentlichungstag der Anmeldung: 22.06.2011
(73) Patentinhaber: Michael Weinig Ag, 97941 Tauberbischofsheim (DE)
(72) Erfinder: Peter, Martin, 97941 Tauberbischofsheim (DE)
(74) Vertreter: Kohl, Karl-Heinz

(56) Entgegenhaltungen:
- EP-A2- 1 671 746
- WO-A1-2004/019106
- WO-A2-03/009951
- DE-C1- 19 716 971
- US-A1- 2005 189 040
- US-B1- 6 189 682

## Beschreibung

Die Erfindung betrifft eine Maschine zum Bearbeiten von Werkstücken aus Holz, Kunststoff und dergleichen, vorzugsweise eine Kehlmaschine, nach dem Oberbegriff des Anspruches 1 sowie ein Verfahren zum Überwachen des Transportweges von Werkstücken in einer solchen Maschine nach dem Oberbegriff des Anspruches 12. Eine solche Maschine und ein solches Verfahren sind aus dem Dokument WO2004/019106A1 bekannt. Bei Kehlmaschinen werden die Werkstücke mit Hilfe von Transportwalzen auf der Transportbahn durch die Maschine gefördert. Die Transportwalzen halten die Werkstücke bei der Bearbeitung und hindern diese am Zurückschlagen und Herausschleudern aus der Maschine. Die Bearbeitung der Werkstücke erfolgt im Gegenlauf, das heißt die Bearbeitungskräfte wirken im Wesentlichen entgegen der Vorschubrichtung. Aus diesem Grunde dürfen die Transportwalzen als Vorschub bei laufenden Maschinenspindeln nicht nach oben verstellt werden, wenn sich noch Werkstücke in der Maschine befinden könnten. Diese Werkstücke würden sonst freigegeben und aus der Maschine in Richtung auf die Eingabeseite herausgeschleudert werden.

Um in der Kehlmaschine dickere Werkstücke zu bearbeiten, müssen die Transportwalzen auf die neue Werkstückdicke eingestellt werden. Aufgrund der geschilderten Probleme werden die Spindeln für die Maschineneinstellung angehalten. Der zeitliche Aufwand sowie der Energieverbrauch der Spindelmotoren zum Abbremsen und erneuten Starten sind hoch.

Es sind Teileüberwachungseinrichtungen bei Maschinen bekannt, um beispielsweise Maschinenelemente kollisionsfrei zu positionieren. Bei diesen Überwachungseinrichtungen ist jedes einzelne Vorschubpendel, das die entsprechenden Transportwalzen trägt, mit einem Schalter versehen. Er erkennt, ob das Pendel durch das Werkstück angehoben ist. Ist dies der Fall, dann ist dies ein Hinweis darauf, dass sich in der Maschine ein Werkstück befindet. Ist das Vorschubpendel nicht angehoben, dann befindet es sich in seiner unteren Grundstellung. Dann befindet sich kein Werkstück in der Maschine. Solche Überwachungseinrichtungen sind für eine sicherheitsrelevante Überwachung der gesamten Maschine allerdings nicht geeignet, da Werkstücke auch zwischen benachbarten Vorschubwalzen liegen könnten. Dann wären die Vorschubpendel nicht angehoben und würden somit fälschlicherweise anzeigen, dass sich in der Maschine kein Werkstück befindet. Auch können sich einzelne Transportwalzen bei Transportproblemen und/oder Transportstockungen in die Werkstücke eingraben. Dann wären die Vorschubpendel ebenfalls nicht angehoben und würden damit fälschlicherweise anzeigen, dass sich in der Maschine kein Werkstück befindet.

Der Erfindung liegt die Aufgabe zugrunde, die gattungsgemäße Maschine und das gattungsgemäße Verfahren so auszubilden, dass bei einem Dimensionswechsel der zu bearbeitenden Werkstücke eine zuverlässige, zeit- und energiesparende Maschineneinstellung gewährleistet ist.

Diese Aufgabe wird bei der gattungsgemäßen Maschine erfindungsgemäß mit den kennzeichnenden Merkmalen des Anspruches 1 und beim gattungsgemäßen Verfahren erfindungsgemäß mit den kennzeichnenden Merkmalen des Anspruches 12 gelöst.

Mit der Überwachungseinrichtung ist es möglich, zuverlässig zu überprüfen, ob sich in der Maschine ein Werkstück befindet. Für diese Überwachung ist ein Abschalten der Spindeln bei der Neueinstellung der Maschine nicht notwendig. Mit der Sensorik wird der Transportweg der Werkstücke durch die Maschine erfasst. Auf diese Weise lässt sich das Vorhandensein eines Werkstückes in der Maschine unmittelbar erkennen. Ist der Transportweg frei, wird die Maschine zur Neupositionierung ihrer Elemente freigegeben. Befindet sich jedoch noch ein Werkstück im Transportweg, wird dies von der Überwachungseinrichtung erkannt und kein Signal zur Maschinenumstellung abgegeben.

Um die Überwachung des Transportweges durchzuführen, wird die Sensorik in den Transportweg der Werkstücke so verstellt, dass der Sensorstrahl den Transportweg erfasst. Vorteilhaft hat die Sensorik wenigstens einen Reflektor und wenigstens einen Sensor. Der Reflektor wird aus einer Grundstellung in den Transportweg der Werkstücke verstellt. Außerdem wird der Sensor quer zum Transportweg der Werkstücke über einen vorgegebenen Mess-/Erkennungs- bzw. Überwachungsbereich bewegt. Der vom Sensor ausgesandte Sensorstrahl trifft bei freiem Transportweg auf den Reflektor und gelangt zurück zum Empfänger des Sensors. Befindet sich im Transportweg noch ein Werkstück, gelangt der Sensorstrahl nicht auf den Reflektor und zurück, so dass die Maschine für die Umstellung nicht freigegeben wird.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine erfindungsgemäße Maschine mit einer Überwachungseinrichtung,
- Fig. 2: die Maschine gemäß Fig. 1 ohne Abdeckteile,
- Fig. 3: eine Ansicht auf die Überwachungseinrichtung aus der Richtung des Maschinenauslaufs,
- Fig. 4: eine Sensoreinheit der Überwachungseinrichtung in perspektivischer Darstellung.

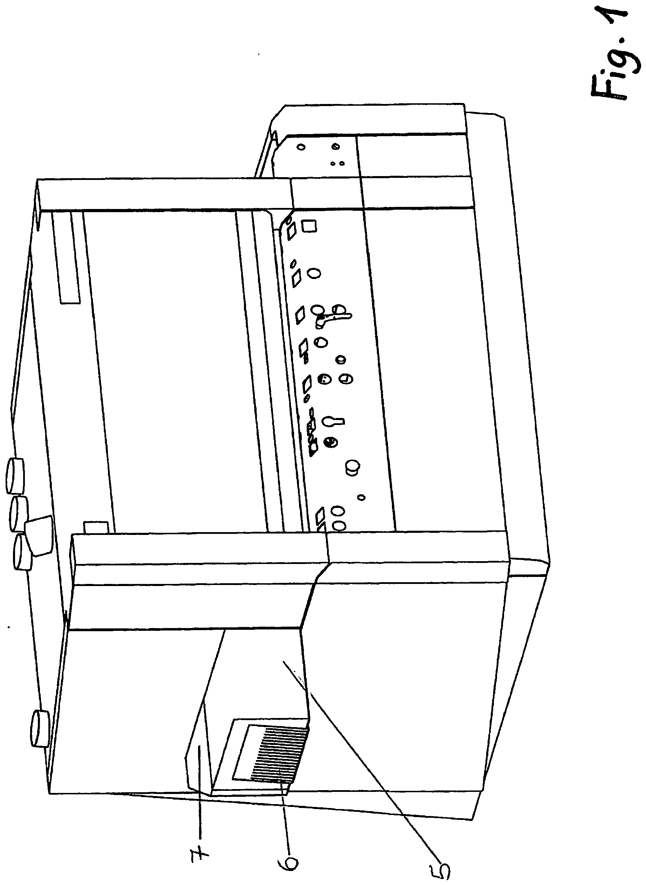

Fig. 1 zeigt beispielhaft eine Kehlmaschine, in der die Werkstücke mittels Transportwalzen in bekannter Weise transportiert werden. Mit den Transportwalzen werden die Werkstücke gehalten, wenn diese mit den in der Kehlmaschine vorhandenen Bearbeitungswerkzeugen bearbeitet werden, um ein Zurückschlagen und Herausschleudern der Werkstücke aus der Maschine zu verhindern. Kehlmaschinen haben, in Transportrichtung der Werkstücke durch die Maschine gesehen, zumindest eine untere Spindel, eine nachfolgende rechte Spindel, eine nachfolgende linke Spindel sowie eine nachfolgende obere Spindel. Auf den entsprechenden Spindeln sitzen die jeweiligen Werkzeuge. Die Kehlmaschine kann darüber hinaus noch weitere Spindeln enthalten. Mit den auf den Spindeln sitzenden Werkzeugen werden die Werkstücke an allen vier Seiten bearbeitet, beispielsweise glatt gehobelt. Sitzen auf den Spindeln Profilierwerkzeuge, dann werden die Werkstücke an der entsprechenden Seite profiliert.

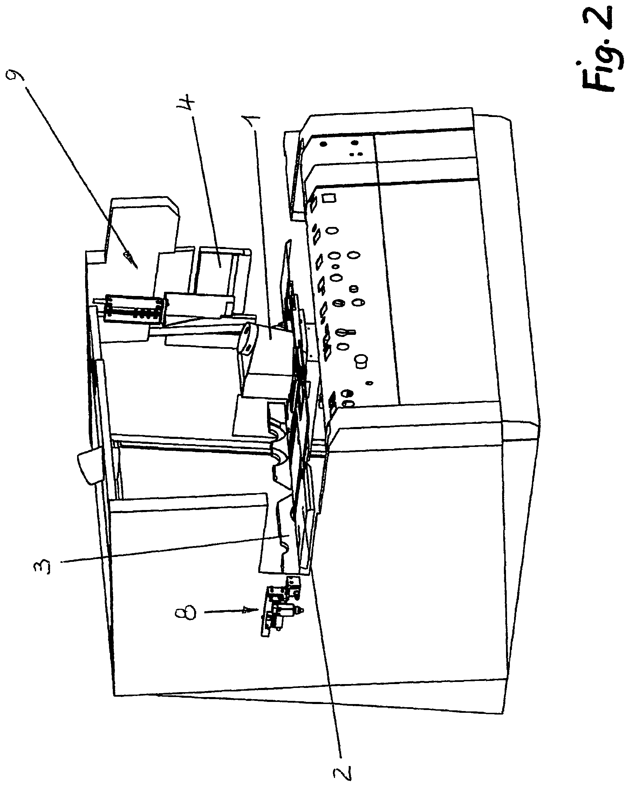

In Fig. 2 ist eine Absaughaube 1 für eine linke vertikale Spindel zu erkennen. Mit dem auf dieser Spindel sitzenden Werkzeug wird die in Transportrichtung linke Längsseite des Werkstückes bearbeitet, das während des Transports durch die Maschine auf Tischplatten 2 aufliegt. Mit ihrer in Transportrichtung rechten Längsseite liegt das Werkstück beim Transport durch die Maschine an einer Längsführung 3 in Form eines Anschlags an, der im Bereich der rechten vertikalen Spindel für den Durchtritt des auf dieser Spindel sitzenden Werkzeuges unterbrochen ist. In Fig. 2 erfolgt der Einlauf der Werkstücke in die Maschine an der rechten Seite. Erkennbar ist eine Einlaufklappe 4, unter der die Werkstücke, auf den Tischplatten 2 aufliegend, in die Maschine transportiert wird.

Die Maschine ist an ihrer linken Seite mit einem Auslaufkanal 5 (Fig. 1) versehen, dessen Austrittsöffnung durch ein Schließelement 6, z. B. einen Streifenvorhang, geschlossen ist, das so ausgebildet ist, dass es durch das Werkstück weggedrückt oder weggebogen werden kann. Quer an den Auslaufkanal 5 schließt eine Abdeckung 7 an, unterhalb der sich eine Sensoreinheit 8 (Fig. 2) befindet. Sie ist Teil einer Überwachungseinrichtung, mit der zuverlässig erkannt werden kann, ob sich Werkstücke in der Maschine befinden.

Im Bereich des Einlaufes in die Maschine ist eine Reflektoreinheit 9 innerhalb der Maschine angeordnet, die mit der Sensoreinheit 8 beim Überwachungsvorgang zusammenwirkt. Die Sensor- und die Reflektoreinheit 8, 9 bilden eine Sensorik.

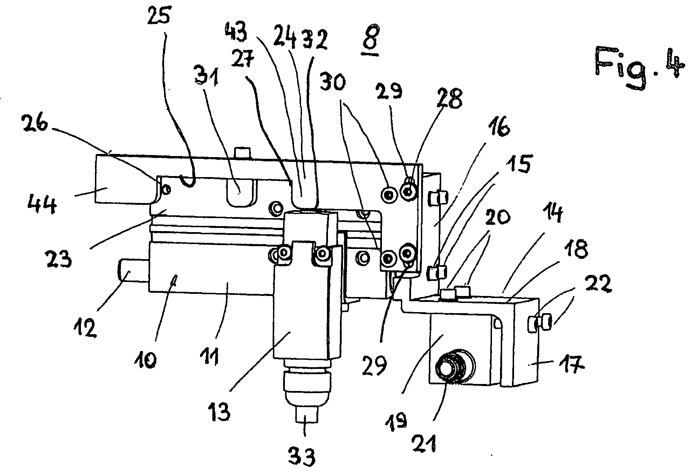

Die Sensoreinheit 8 hat eine Führungseinheit 10 (Fig. 4) mit einem Gehäuse 11 und einer mittels wenigstens einer Führungsstange 12 und einer nicht dargestellten Kolbenstange verfahrbaren Befestigungsplatte 23. Die Sensoreinheit 8 ist mit einem Endschalter 13 versehen, der quer zur Längsrichtung der Führungsstange 12 nach unten ragt. An der Befestigungsplatte 23 ist ein Winkelstück 14 über Befestigungsschrauben 15 befestigt. Das Winkelstück 14 hat zwei vertikale Schenkel 16, 17, die durch einen Steg 18 miteinander verbunden sind. In der Einbaulage ragt der Schenkel 16 nach oben und der Schenkel 17 nach unten.

Am Steg 18 ist ein Sensorhalter 19 mit Schrauben 20 befestigt. Der Sensorhalter 19 nimmt wenigstens einen Sensor 21 auf und ist an der Unterseite des Steges 18 befestigt. Mit den Einstellschrauben 22 kann der Sensorhalter 19 und damit der Sensor 21 im Rahmen der Luft, den die Einstellschrauben 22 in den entsprechenden Bohrungen des Schenkels 17 haben, in einer horizontalen Ebene eingestellt werden.

Der vertikale Schenkel 16 des Winkelstücks 14 ist mit den Befestigungsschrauben 15 mit der Befestigungsplatte 23 verbunden, die längs des Gehäuses 11 über die Führungsstange(n) 12 und mittels der nicht dargestellten Kolbenstange durch Beaufschlagen mit pneumatischem Druck verstellbar ist. Das Gehäuse 11 der Führungseinheit 10 ist fest an der Maschinenauslaufseite befestigt.

Am Winkelstück 14 ist eine Schaltnockenstange 24 befestigt, die sich in Längsrichtung der Führungsstange 12 erstreckt und an ihrer Unterseite eine Vertiefung 25 aufweist, die von zwei Nockenkanten 26, 27 von Nocken 44, 45 begrenzt ist. Über sie wird die maximale ein- und ausgefahrene Position des Sensors 21 festgelegt. Die beiden Nockenkanten 26, 27 liegen vorteilhaft parallel zueinander und erstrecken sich senkrecht zur Achse der Führungsstange 12. Die Schaltnockenstange 24 ist mit Befestigungsschrauben 28 an einer Stirnseite des Schenkels 16 des Winkelstückes 14 befestigt. Wie Fig. 4 zeigt, durchsetzen die Befestigungsschrauben 28 Langlöcher 29 in der Schaltnockenstange 24. Da die Langlöcher 29 sich senkrecht zur Führungsstange 12 erstrecken, lässt sich die Nockenstange 24 senkrecht zur Führungsstange 12 einstellen. Mit Einstellschrauben 30, die wie die Einstellschrauben 22 als Abdrückschrauben dienen und sich auf der Befestigungsplatte 23 abstützen, lässt sich das Winkelstück 14, der an diesem befestigte Sensorhalter19 und die Schaltnockenstange 24 in einer Vertikalebene senkrecht zur Verfahrrichtung des Sensors 21 verstellen. Damit wird der Sensor 21 und der Sensorstrahl in dieser vertikalen Ebene parallel zum Maschinentisch 2 eingestellt.

Im Bereich zwischen den Nockenkanten 26, 27 ist ein verstellbarer Schaltnocken 31 vorgesehen, der den Beginn des Mess-, Erkennungs- bzw. Überwachungsweges des Sensors 21 vor der Längsführung 3 der Maschine festlegt.

Der Endschalter 13 hat einen Stößel 32, der mit der Nockenstange 24 zusammenwirkt. Der Endschalter 13 wird über die Nockenkanten 26, 27 bzw. den Schaltnocken 31 betätigt und gibt Schaltimpulse über eine Leitung 33 an eine Steuerung weiter. Durch die beschriebene einstellbare Nockenstange 24 kann der Schaltpunkt und damit Schaltweg exakt eingestellt werden.

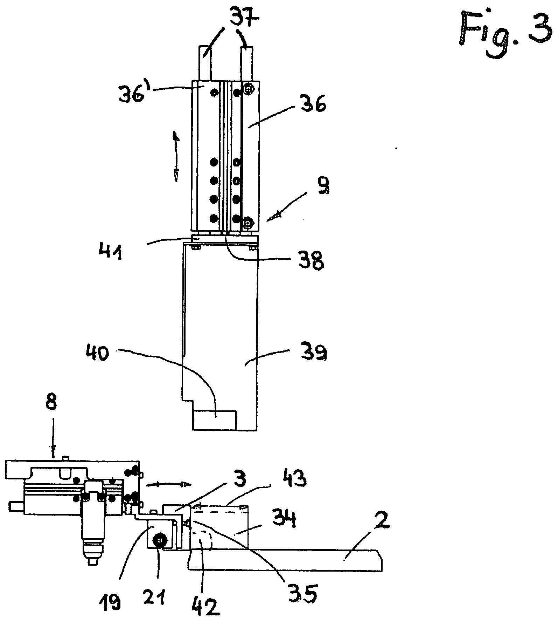

Die Sensoreinheit 8 ist am Auslauf 5 der Maschine vorteilhaft so vorgesehen, dass sie im Bereich oberhalb des durch die Tischplatten 2 gebildeten Maschinentisches oder einer Auslaufmechanisierung, wie einem Rollenband, verfahren werden kann. In Fig. 3 befindet sich die Sensoreinheit 8 in der zurückgezogenen Stellung, in der der Sensorhalter 19 und der Sensor 21, in Transportrichtung des zu bearbeitenden Werkstückes 34 gesehen, außerhalb des Transportweges des Werkstückes 34 liegt. Dieses liegt mit seiner in Transportrichtung rechten Längsseite 35 an der Längsführung 3 an.

Die Reflektoreinheit 9 der Überwachungseinrichtung befindet sich in der in Fig. 3 dargestellten Ausgangsstellung im Bereich oberhalb der Tischplatten 2. Die Reflektoreinheit 9 hat eine Führungseinheit 36 mit einem Gehäuse 36', in welchem zwei Führungsstangen 37 verschiebbar gelagert sind. Die Führungsstangen 37 erstrecken sich senkrecht zur Verschieberichtung der Sensoreinheit 8 bzw. zur Transportrichtung der Werkstücke 34 durch die Maschine.

Ein Reflektorhalter 39, der wenigstens einen Reflektor 40 am unteren Ende trägt, ist über eine Befestigungsplatte 41 mit den Führungsstangen 37 und wenigstens einer Kolbenstange 38 verbunden. Mittels der Kolbenstange 38 ist der Reflektorhalter 39 in dem Gehäuse 36' der Führungseinheit 36 verschiebbar. Der Reflektor 40 ist an der in Transportrichtung der Werkstücke 34 vorderen Seite des Reflektorhalters 39 angeordnet.

Die Reflektoreinheit 9 ist am Maschineneinlauf, vorzugweise im Bereich oberhalb der Einlaufklappe 4 (Fig. 2), und vorzugweise im Bereich zwischen der Einlaufklappe 4 und der ersten Vorschubwalze angeordnet. Der Reflektor 40 wird im Überwachungsfall mit geringem Abstand vor der in Transportrichtung der Werkstücke 34 rechts angeordneten Längsführung 3 nach unten bis nahezu auf einen nicht dargestellten Einlauftisch für die Werkstücke 34 nach unten getaktet. Die Reflektorfläche hat solche Abmessungen, dass in Verbindung mit dem Verfahrweg des Sensors 21 der Transportbereich innerhalb der Maschine überwacht werden kann. Die Reflektorfläche beträgt beispielhaft etwa 20 auf 60 mm.

Der Reflektorhalter 39 mit dem Reflektor 40 wird lediglich in Höhenverrichtung verstellt. Der Sensor 21 kann in der beschriebenen Weise mit Hilfe der Einstell/Abdrückschrauben 22, 30 so eingestellt werden, dass der Sensorstrahl exakt parallel zur Tischplattenoberseite und zur Längsführung 3 ausgerichtet ist.

Mit der Überwachungseinrichtung lässt sich einfach und dennoch zuverlässig erkennen, ob sich noch Werkstücke in der Maschine befinden. Während der Bearbeitung der Werkstücke 34 in der Maschine befinden sich die Sensoreinheit 8 und die Reflektoreinheit 9 in einer Ruhestellung, in der sie den Transport und die Bearbeitung der Werkstücke 34 in der Maschine nicht beeinträchtigen. Soll die Maschine umgestellt werden, um Werkstücke mit anderen Dimensionen zu bearbeiten, dann werden die Sensoreinheit 8 und die Reflektoreinheit 9 im Rahmen eines fest vorgegebenen und später genauer beschriebenen Überwachungszyklus verfahren. Aus der Grundstellung verfährt die Einheit in den Überwachungsbereich. Der Sensor 21 befindet sich dabei im Bereich oberhalb der Tischplatten 2. Beispielhaft überfährt der Sensor 21 in einer Höhe von etwa 10 mm über dem Maschinentisch 2 einen Überwachungsbereich von beispielsweise etwa 5 bis 50 mm von der Längsführung 3 aus. Der Reflektor 40 wird bis nahezu auf den Einlauftisch bzw. Maschinentisch nach unten abgesenkt, so dass der Sensorstrahl auf den Reflektor 40 trifft. Die Reflektorfläche ist so gewählt, dass der Sensorstrahl innerhalb des beispielhaft angegebenen Überwachungsbereiches von etwa 5 bis 50 mm von der Längsführung 3 auf den Reflektor 40 trifft.

Wie in Fig. 3 beispielhaft dargestellt ist, ist das Werkstück 34 an seiner in Transportrichtung rechten Längsseite mit einem Falz 42 versehen. Je nach Profilierung des Werkstückes 34 kann dieser Falz 42 unterschiedlich tief gestaltet sein. Das Werkstück 34 hat beispielsweise eine Breite 43 von 20 bis 200 mm und eine maximale Kehltiefe von 35 mm. Da der Sensor 21 zur Überwachung im Beispielsfall bis 50 mm von der Längsführung 3 aus in den Transportweg der Werkstücke 34 verfahren wird, ist gewährleistet, dass der Sensorstrahl nicht nur durch den Falz 42 gelangt und damit fälschlicherweise anzeigt, dass sich kein Werkstück in der Maschine befindet. Der Sensor 21 wird über den Bereich bis etwa 50 mm von der Längsführung 3 bewegt, so dass der Sensorstrahl auf jeden Fall auf das Werkstück trifft und somit angezeigt wird, dass sich ein Werkstück 34 in der Maschine befindet.

Werden auf der Maschine schmalere Werkstücke, d. h. kleiner beispielsweise 50 mm bearbeitet, dann befindet sich die in Transportrichtung der Werkstücke linke Spindel in einem Abstand zur Längsführung 3, der kleiner ist als der Verfahrweg des Sensors. Der Sensorstrahl würde in diesem Falle auf die linke Spindel treffen und somit anzeigen, dass sich in der Maschine ein Werkstück befindet, obwohl sich lediglich die linke Spindel in ihrer Arbeitsposition befindet Um diese Fehlmeldung auszuschließen, wird die linke Spindel mit Ablauf des Prüfzyklus beispielhaft auf eine Arbeitsbreite größer etwa 50 mm eingestellt. Dann befindet sich diese linke Spindel auf jeden Fall außerhalb des Prüfbereiches, der vom Sensorstrahl erfasst wird. Diese Verstellung der linken Spindel wird vorteilhaft automatisch bei Initiierung des Prüfzyklus vorgenommen. Hat die Maschine keine automatisch verstellbaren Spindeln, wird die linke Spindel in diesem Falle manuell durch den Maschinenbediener verstellt.

Der Umschaltpunkt bzw. der Verfahrbereich des Sensors 21 kann auch in Abhängigkeit, d. h. der Position der linken Spindel erfolgen, beispielsweise durch einen verstellbaren Umschaltnocken, welcher zusammen mit der linken Spindel verstellt wird, oder durch einen Positionssensor, welcher die Stellung der linken Spindel abfragt. Darüber hinaus kann der Umschaltpunkt auch über die Maschinensteuerung ermittelt werden. In allen Fällen fährt der Sensor 21 über die ganze, gerade eingestellte Arbeitsbreite und kann diesen gesamten Bereich überwachen. Genauso ist es möglich, den Verfahrbereich generell über die gesamte Arbeitsbreite zu wählen. Damit die Bauteile der linken Spindel in diesem Fall nicht als Werkstück im Arbeitsbereich erkannt werden, kann zum Beispiel ein zweiter Reflektor an der linken Spindel vorgesehen sein, welcher zusammen mit der linken Spindel verstellt wird und die Bauteile der linken Spindel abdeckt.

Sollen in der Maschine dünne Werkstücke bearbeitet werden, die beispielsweise kleiner als 10 mm dick sind, dann würden im Strahlbereich des Sensors 21 die Vorschub- und Andruckelemente liegen, die von oben auf dieses Werkstück einwirken. Der Sensorstrahl würde darum nicht auf den Reflektor 40 treffen und damit signalisieren, dass sich in der Maschine ein Werkstück befindet. Um diese Fehlmeldung zu vermeiden, können die Spindelmotore abgeschaltet werden, so dass die Vorschubelemente aufwärts verstellt werden können. Es ist aber auch möglich, die Verfahrhöhe des Sensors 21 kleiner als die minimale Arbeitshöhe der Maschine vorzusehen. So könnte diese Verfahrhöhe des Sensors 21 beispielsweise auf 5 mm Abstand zur Auflagefläche der Tischplatten 2 eingestellt sein. Dann würde der Sensorstrahl, auch wenn die Vorschub- und Andruckelemente in ihre unterste Lage gefahren sind, nicht auf diese Elemente treffen.

Die beschriebene Überwachungseinrichtung wird vorteilhaft dort eingesetzt, wo die Werkstücke 34 in vielen unterschiedlichen Dimensionen auf vier Seiten glattgehobelt werden. Die hierfür eingesetzten Maschinen haben positionierbare linke und obere Werkzeugspindeln. Beim Wechsel von einer auf die andere Position muss nur die Verstellung dieser Werkzeugspindeln und der Vorschubelemente vorgenommen werden. Hierbei müssen keine Werkzeuge gewechselt oder Andruckelemente, die auf dem zu bearbeitenden Werkstück 34 aufliegen, neu eingestellt werden. Es ist darum auch nicht notwendig, die Abdeckung der Maschine zu öffnen. Zudem ist es in einem solchen Fall auch nicht erforderlich, die Werkzeugspindeln auszuschalten, wodurch Zeit und Energie eingespart wird.

Möchte der Bediener die Maschine auf neue Werkstückdimensionen einstellen, wählt er über die Maschinensteuerung die neuen Profildaten aus oder gibt die neuen Werkstückdimensionen (Breite und Höhe) in die Steuerung ein. Anschließend betätigt der Maschinenbediener beispielsweise einen Schalter, einen Knopf oder dergleichen zum Starten der Positionierung. Vor dem letztendlichen Beginn der Positionierbewegung läuft als Positionierfreigabe folgender Prüfzyklus ab:
- Der Vorschubantrieb für die Vorschubelemente, vorzugsweise Transportwalzen, für die Werkstücke 34 wird entweder automatisch oder manuell abgeschaltet.
- Die Führungseinheit 36 der Reflektoreinheit 9 wird mit Druck beaufschlagt und ausgefahren, wodurch der Reflektorhalter 39 mit dem Reflektor 40 nach unten in Richtung auf die Tischplatten 2 verfahren wird. Die Endposition kann sich aus der ausgefahrenen Zylinderendstellung oder durch das Auffahren auf einen Anschlag oder den Maschinentisch ergeben. Die ausgefahrene Position kann auf verschiedene Weise erfasst werden. Es kann beispielsweise ein Positions- oder Wegsensor eingesetzt werden, mit dem das Erreichen der Mess-, Erkennungs- bzw. Überwachungsposition des Reflektors 40 erfasst wird. Es kann die Verfahrzeit bei der Ausfahrbewegung aber auch über ein Zeitrelais angenähert werden, welches nach Ablauf der eingestellten Zeit einen Impuls an die übergeordnete Steuerung zur Initiierung der weiteren Verfahrensschritte sendet.
   Sollte sich ein Werkstück 34 im Bereich des Maschineneinlaufes befinden, dann kann der Reflektorhalter 39 nicht bis in die Messposition verfahren werden. Dann wird auch keine Freigabe zum Verfahren der Vorschubelemente erteilt.
- Mit dem Start der Positionierung wird bei Bedarf die in Transportrichtung der Werkstücke 34 linke vertikale Spindel nach außen verfahren, so dass ihr Abstand von der gegenüberliegenden Längsführung 3 vergrößert wird. Diese linke Spindel wird so weit verfahren, dass sie sich nicht im Strahlweg des Sensors 21 befindet. Nach Abschluss des Überwachungsvorganges und nach Positionierfreigabe für den Vorschub wird diese linke Spindel gleichzeitig mit dem Vorschub und ggf. weiteren Spindeln, beispielsweise einer horizontal oberen Werkzeugspindel, wieder in die Sollposition verstellt.
- Anschließend wird die Führungseinheit 10 der Sensoreinheit 8 mit Druckmedium, vorzugsweise Druckluft, beaufschlagt, so dass die Führungseinheit 10 die Mess-, Überwachungs- bzw. Erkennungsfahrt ausführt. In der in den Fig. 2 bis 4 dargestellten Ausgangsstellung ist der Endschalter 13 betätigt, da der Stößel 32 an der Unterseite der Schaltnockenstange 24 anliegt. In dieser Stellung darf der Sensor 21 nicht geschaltet sein. Nicht geschaltet heißt, dass der vom Sender des Sensors 21 ausgesandte Strahl nicht wieder zurück in den Empfänger des Sensors 21 reflektiert wird. Dies ist der Fall, wenn der Sensorstrahl nicht auf den gegenüberliegenden Reflektor 40 trifft, weil der Sensorstrahl außerhalb der Reflektorfläche liegt oder durch einen Gegenstand im Strahlweg unterbrochen ist. Wird die Führungseinheit 10 mit dem Winkelstück 14 und dem Sensor 21 aus der Grundstellung in Richtung auf die Mess-, Erkennungs- bzw. Überwachungsstellung relativ zum Endschalter 13 verschoben, gelangt der verstellbare Nocken 31 nach einem bestimmten Verschiebeweg in Kontakt mit dem Stößel 32 des Endschalters 13. Der Schaltnocken 31 wird längs der Schaltnockenstange 24 so eingestellt, dass der vom Sensor 21 ausgehende Sensorstrahl zu diesem Zeitpunkt neben der Längsführung 3 verläuft und auf den Reflektor 40 trifft, sofern sich im Strahlweg kein Hindernis bzw. Gegenstand befindet. Da der Schaltnocken 31 vorteilhaft stufenlos längs der Schaltnockenstange 24 eingestellt werden kann, lässt sich exakt die Position einstellen, bei der der Sensorstrahl neben der Längsführung 3 in Richtung auf den Reflektor 40 strahlt. Sobald der Schaltnocken 31 mit dem Endschalter 13 zusammenwirkt, wird dieser betätigt. Der von dem Endschalter abgegebene Schaltimpuls kennzeichnet den Beginn des Mess-, Erkennungs- bzw. Überwachungsbereiches. Die Führungseinheit 10 mit der Schaltnockenstange 24 und dem Sensor 21 fährt so weit aus, bis der Endschalter 13 mit dem in Fig. 4 linken Nocken 44 zusammenwirkt. In diesem Augenblick wird die Verfahrrichtung der Führungseinheit 10 umgeschaltet. Die Führungseinheit mit dem Sensor 21 wird somit wieder in Richtung auf die Grundstellung zurückgefahren. Wenn der Schaltnocken 31 wieder mit dem Endschalter 13 zusammenwirkt ist das Ende des Mess-, Erkennungs- bzw. Überwachungsbereiches erreicht. Der Sensor ist über den gesamten Verfahrweg in diesem Mess-, Erkennungs- bzw. Überwachungsbereich geschaltet, wenn sich kein Werkstück in dem Strahlweg befindet. Danach muss der Sensor 21 wieder ausgehen, weil der Sensorstrahl nicht mehr auf den Reflektor 40 trifft bzw. sich durch die Längsführung 3 ein Hindernis im Strahlweg befindet. Der Sensor 21 wird weiter in Richtung auf die Grundstellung verschoben, bis die Kolbenstange der Führungseinheit 10 wieder komplett eingefahren ist. In dieser Stellung wirkt der Endschalter 13 mit dem in Fig. 4 rechten Nocken 45 zusammen. Damit ist der Prüfzyklus beendet. Es ist auch möglich, den Mess-, Erkennungs- bzw. Überwachungsbereich nur beim Ausfahren oder nur beim Einfahren des Sensors 21 auszuwerten.
- Wurden während des beschriebenen Messzyklus alle Schaltbedingungen eingehalten, erfolgt die Freigabe zur Positionierung der Vorschubelemente bei laufenden Spindeln, so dass die Positionierfahrt ausgeführt werden kann. Die Spindeln, die Vorschub- und die Andruckelemente werden in die neue Lage verstellt. Die Schaltbedingungen werden dadurch bestimmt, dass der Sensor 21 in der Grundstellung nicht geschaltet, im Mess-, Erkennungs- bzw. Überwachungsbereich (zwischen Schaltnocken 31 und Nocken 44) geschaltet und anschließend beim Zurückfahren nach dem Verlassen des Mess-, Erkennungs- bzw. Überwachungsbereiches wieder nicht geschaltet ist. Wenn während des Messzyklus der Sensorstrahl im Mess-, Erkennungs- bzw. Überwachungsbereich auf den Reflektor 40 trifft und von diesem zum Empfänger zurück reflektiert wird, dann befindet sich im Transportweg der zu bearbeitenden Werkstücke 34 kein Hindernis, sei es ein Werkstück oder eine Spindel oder Vorschub- und Andruckelemente.
- Sind beim Messzyklus nicht alle Schaltbedingungen erfüllt, dann erfolgt keine Freigabe, so dass die Positionierung der Vorschubelemente nicht vorgenommen wird. Vorteilhaft wird in diesem Fall eine Fehlermeldung angezeigt. Dies ist dann der Fall, wenn während des Messzyklus der Sensorstrahl nicht auf den Reflektor 40 trifft. Dann befindet sich im Strahlweg ein Hindernis. Die Maschine muss dann abgeschaltet und leer geräumt werden.
   Sollte sich ein Werkstück im Bereich des Auslaufkanales 5, das heißt im Verfahrbereich des Sensors 21, befinden, so kann die Führungseinheit 10 gar nicht so weit senkrecht zur Transportrichtung der Werkstücke verschoben werden, dass der Sensorstrahl neben der Längsführung 3 in Richtung auf den Reflektor 40 strahlen kann. In diesem Falle wird der Startpunkt des Mess-, Erkennungs- bzw. Überwachungsbereiches und der Umschaltpunkt nicht erreicht. Auch in diesem Falle erfolgt keine Freigabe der Maschine. Damit der Sensor 21 in diesem Falle dennoch in die Grundstellung zurückgefahren werden kann, kann die Umsteuerung der Führungseinheit 10 über ein Zeitrelais erfolgen. Zu den für die Positionierfreigabe notwendigen Schaltbedingungen gehört auch, dass der Sensor 21 außerhalb des Mess-, Erkennungs- bzw. Überwachungsbereiches, insbesondere in der Grundstellung, nicht geschaltet sein darf. Damit wird sowohl der Sensor 21 selbst als auch die Steuerung einem ständigen Funktionstest unterzogen. Eine Fehlfunktion des Sensors 21 bzw. der Steuerung wird sofort erkannt und eine Positionierfreigabe wird nicht gegeben.

Abweichend zum beschriebenen Ausführungsbeispiel kann die Sensor- und Reflektoreinheit auch anders innerhalb oder außerhalb der Abdeckung der Maschine angeordnet sein und zur Überwachung in anderen Richtungen in den Verfahr- bzw. Transportweg der Werkstücke verstellt werden. Insbesondere können auch die Sensoreinheit am Maschineneinlauf und die Reflektoreinheit am Maschinenauslauf vorgesehen sein.

Anstatt der Reflexionslichtschranke mit Sensor und Reflektor, bei der der Sensor eine Sende- und Empfängereinheit aufweist, kann auch eine andere geeignete Sensorik eingesetzt werden, beispielsweise eine Einweglichtschranke mit einem Senderbauteil und einem Empfänger. In diesem Falle würden sich Sender und Empfänger gegenüber liegen.

Ebenso ist möglich, einen Reflexions-Lichttaster, welcher einen Sender und Empfänger aufweist, einzusetzen. Bei einem solchen Reflexionslichttaster wird der ausgesandte Strahl von dem zu erfassenden Objekt zurückreflektiert, weshalb hierbei kein gegenüberliegender Reflektor notwendig ist. Ein solcher Reflexions-Lichttaster könnte entweder am Maschinenauslauf, am Maschineneinlauf oder am Maschinenein- und -auslauf in den Transportweg der Werkstücke zur Überwachung verfahren werden. Die Schaltbedingungen wären gerade umgekehrt: Ist kein Werkstück vorhanden, wird der Strahl nicht zurück reflektiert und der Sensor ist nicht geschaltet; ist ein Werkstück vorhanden, wird der Sensor geschaltet.

Grundsätzlich ist jede Art von Sensorik einsetzbar, die geeignet ist, ein Werkstück vorzugsweise aus Holz und vergleichbaren Werkstoffen zu erkennen.

Ebenfalls möglich wäre, dass die Sensorik nur in den Mess-, Erkennungs- bzw. Überwachungsbereich verfahren wird und dort stationär die Arbeitsraumüberwachung durchführt. Vorteilhaft kann man dafür mehrere nebeneinander angeordnete Sensoren einsetzen oder einen sogenannten Sensorvorhang.

## Patentansprüche

1. Maschine zum Bearbeiten von Werkstücken (34) aus Holz, Kunststoff und dergleichen, vorzugsweise Kehlmaschine, mit Spindeln für Werkzeuge sowie mit einer Transportbahn für die Werkstücke (34), die sich von einem Maschineneinlauf bis zu einem Maschinenauslauf erstreckt,
**dadurch gekennzeichnet, dass** die Maschine mit einer Überwachungseinrichtung (8, 9) versehen ist, die wenigstens eine Sensorik aufweist, die aus einer Grundstellung außerhalb des Transportweges der Werkstücke (34) so in den Transportweg der Werkstücke (34) verstellbar ist, dass ein Sensorstrahl der Sensorik in Transportrichtung der Werkstücke (34) verläuft und die Sensorik den Transportweg der Werkstücke (34) durch die Maschine erfasst, wobei ein Sensor (21) der Sensorik in der Grundstellung außerhalb des Transportweges der Werkstücke (34) liegt und quer zum Transportweg der Werkstücke (34) aus der Grundstellung in Richtung auf einen Mess-, Erkennungs- bzw. Überwachungsbereich verstellbar ist.

2. Maschine nach Anspruch 1,
**dadurch gekennzeichnet, dass** die Sensorik wenigstens eine Sensoreinheit (8) und wenigstens eine Reflektoreinheit (9) mit mindestens einem Reflektor (40) aufweist, die in der Mess-, Erkennungs- bzw. Überwachungsstellung einander gegenüberliegen.

3. Maschine nach Anspruch 1 oder 2,
**dadurch gekennzeichnet, dass** die Sensoreinheit (8) im Bereich des Maschinenauslaufes (5), vorzugsweise an der Außenseite der Maschine, angeordnet ist.

4. Maschine nach einem der Ansprüche 1 bis 3,
**dadurch gekennzeichnet, dass** der Sensor (21) im Mess-, Erkennungs- bzw. Überwachungsbereich bis zu einer Endstellung verfährt.

5. Maschine nach einem der Ansprüche1 bis 4,
**dadurch gekennzeichnet, dass** der vom Sensor (21) ausgesandte Sensorstrahl innerhalb des Mess-, Erkennungs- bzw. Überwachungsbereiches neben einer Längsführung (3) für die Werkstücke (34) im Bereich oberhalb der Transportbahn (2) verläuft.

6. Maschine nach einem der Ansprüche 2 bis 5,
**dadurch gekennzeichnet, dass** die Sensoreinheit (8) wenigstens einen Schalter (13) aufweist, der im Zusammenwirken mit relativ zu ihm verstellbaren Nocken (31) und Nockenkanten (26, 27) die Grundstellung, die Endstellung und den Mess-, Erkennungs- bzw. Überwachungsbereich des Sensors (21) definiert.

7. Maschine nach Anspruch 6,
**dadurch gekennzeichnet, dass** die Nocken (31) und Nockenkanten (26, 27) in Verstellrichtung des Sensors (21) relativ zum Schalter (13) verstellbar sind.

8. Maschine nach einem der Ansprüche 2 bis 7,
**dadurch gekennzeichnet, dass** die Reflektoreinheit (9) innerhalb der Maschine angeordnet ist.

9. Maschine nach einem der Ansprüche 2 bis 8,
**dadurch gekennzeichnet, dass** die in Verfahrrichtung des Sensors (21) gemessene Breite des Reflektors (40) so groß ist, dass der Sensorstrahl während des Verschiebens im Mess-, Erkennungs- bzw. Überwachungsbereich bei freiem Transportweg auf den Reflektor (40) trifft.

10. Maschine nach einem der Ansprüche 2 bis 9,
**dadurch gekennzeichnet, dass** der Reflektor (40) aus der Grundstellung, in der er sich außerhalb des Transportweges der Werkstücke (34) befindet, in die Mess-, Erkennungs- bzw. Überwachungsstellung verstellbar ist, in der der Reflektor (40) mit geringem Abstand oberhalb der Transportbahn (2) liegt.

11. Maschine nach einem der Ansprüche 1 bis 10,
**dadurch gekennzeichnet, dass** die Sensorik wenigstens einen Sender und Empfänger aufweist, die in der Mess-, Erkennungs- bzw. Überwachungsstellung einander gegenüberliegen und am Maschinenein- bzw. auslauf angeordnet sind, sich in ihrer Grundstellung außerhalb des Transportweges der Werkstücke (34) befinden und in die Mess-, Erkennungs- bzw. Überwachungsstellung verfahrbar sind.

12. Verfahren zum Überwachen des Transportweges von Werkstücken (34) in einer Maschine nach einem der Ansprüche 1 bis 11,
**dadurch gekennzeichnet, dass** eine Sensorik von einer Grundstellung außerhalb des Transportweges der Werkstücke (34) so in den Transportweg der Werkstücke (34) verstellt wird, dass der Sensorstrahl in Transportrichtung der Werkstücke (34) verläuft und den Transportweg der Werkstücke (34) durch die Maschine erfasst, dass wenigstens ein Reflektor (40) der Sensorik in den Transportweg der Werkstücke (34) verstellt und wenigstens ein Sensor (41) der Sensorik quer zum Transportweg der Werkstücke (34) aus der Grundstellung in Richtung auf einen Mess-, Erkennungs- bzw. Überwachungsbereich so bewegt wird, dass der Sensorstrahl bei freiem Transportweg auf den Reflektor (40) trifft und von ihm zurück zu einem Empfänger des Sensors (21) reflektiert wird.

13. Verfahren nach Anspruch 12, **dadurch gekennzeichnet, dass** die Überwachungsmessung bei laufen den Spindeln durchgeführt wird.

14. Verfahren nach Anspruch 12 oder 13, **dadurch gekennzeichnet, dass** der Sensorstrahl neben der Längsführung (3) mit geringem Abstand oberhalb der Transportbahn (2) in Richtung auf den Reflektor (40) ausgesandt wird.

15. Verfahren nach einem der Ansprüche 12 bis 14,
**dadurch gekennzeichnet, dass** der Sensor (21) bei Eintritt in den Mess-, Erkennungs- bzw. Überwachungsbereich bei freiem Transportweg geschaltet und bei Austritt aus diesem Bereich nicht geschaltet wird.

## Claims

1. Machine for machining workpieces (34) made of wood, plastic and the like, preferably moulding machine with spindles for tools as well as with a transport path for the workpieces (34) which extends from a machine inlet to a machine outlet,
**characterised in that** the machine is provided with a monitoring device (8, 9) having at least one sensor system which is displaceable from a basic position outside the transport path of the workpieces (34) into the transport path of the workpieces (34) in such a way that a sensor beam of the sensor system extends in transporting direction of the workpieces (34) and the sensor system records the transport path of the workpieces (34) through the machine, wherein one sensor (21) of the sensor system is arranged in the basic position outside the transport path of the workpieces (34) and can be displaced transverse to the transport path of the workpieces (34) from the basic position in the direction of a measuring, recognition and monitoring area respectively.

2. Machine according to claim 1,
**characterised in that** the sensor system comprises at least one sensor unit (8) and at least one reflector unit (9) with at least one reflector (40) which in the measuring, recognition and monitoring position respectively are opposite each other.

3. Machine according to claim 1 or 2,
**characterised in that** the sensor unit (8) is arranged in the area of the machine outlet (5), preferably on the outside of the machine.

4. Machine according to any one of claims 1 to 3,
**characterised in that** the sensor (21) moves to an end position in the measuring, recognition and monitoring area respectively.

5. Machine according to any one of claims 1 to 4,
**characterised in that** the sensor beam emitted by the sensor (21) extends within the measuring, recognition and monitoring area respectively next to a longitudinal guide (3) for the workpieces (34) in the area above the transport path (2).

6. Machine according to any one of claims 2 to 5,
**characterised in that** the sensor unit (8) comprises at least one switch (13), which in interaction with cams (31) and cam edges (26, 27), which are adjustable relative thereto, defines the end position and the measuring, recognition and monitoring area respectively of the sensor (21).

7. Machine according to claim 6,
**characterised in that** the cams (31) and the cam edges (26, 27) are displaceable in the displacement direction of the sensor (21) relative to the switch (13).

8. Machine according to any one of claims 2 to 7,
**characterised in that** the reflector unit (9) is arranged within the machine.

9. Machine according to any one of claims 2 to 8,
**characterised in that** the width of the reflector (40) measured in the displacement direction of the sensor (21) is so large that during the displacement in the measuring, recognition and monitoring area respectively the sensor beam hits the reflector (40) when the transport path is clear.

10. Machine according to any one of claims 2 to 9,
**characterised in that** the reflector (40) can be moved from the basic position, in which it is located outside the transport path of the workpieces (34), the measuring, recognition and monitoring into position respectively, in which the reflector (40) lies at a small distance above the transport path (2).

11. Machine according to any one of claims 1 to 10,
**characterised in that** the sensor system comprises at least one sensor and receiver which in the measuring, recognition and monitoring positon respectively are opposite each other and are arranged at the machine inlet and outlet, are outside the transport path of the workpieces (34) in their basic position and can be moved into the measuring, recognition and monitoring position respectively.

12. Method of monitoring the transport path of workpieces (34) in a machine according to any one of claims 1 to 11,
**characterised in that** a sensor system is displaced from a basic position outside the transport path of the workpieces (34) into the transport path of the workpieces (34) in such a way that the sensor beam extends in the transporting direction of the workpieces (34) and records the transport path of the workpieces (34) through the machine,that at least one reflector (40) of the sensor system is moved into the transport path of the workpieces (34) and at least one sensor (41) of the sensor system is moved transversely to the transport path of the workpieces (34) from the basic position in the direction of a measuring, recognition and monitoring area respectively in such a way that when the transport path is clear the sensor beam hits the reflector (4) and reflected back by it to a receiver of the sensor (21).

13. Method according to claim 12,
**characterised in that** the monitoring measurement is carried out while the spindles are operating.

14. Method according to claim 12 or 13,
**characterised in that** the sensor beam is emitted next to the longitudinal guide (3) at a small distance above the transport path (2) towards the reflector (40).

15. Method according to any one of claims 12 to 14,
**characterised in that** on entering the measuring, recognition and monitoring area respectively the sensor (21) is switched when the transport path is clear and is not switched on leaving this area.

## Revendications

1. Machine destinée a traiter des pièces (34) en bois, en matière plastique et analogues, de préférence moulurière, comportant des broches pour des outils, de même qu'une bande transporteuse pour les pièces (34) qui s'étend depuis une entrée de machine jusqu'à une sortie de machine,
**caractérisée en ce que** la machine est pourvue d'un dispositif de surveillance (8, 9) qui présente au moins un système de détection qui est déplaçable depuis une position de base en dehors du parcours de transport des pièces (34) de manière à ce qu'un rayon de capteur du système de détection s'étende dans le sens de transport des pièces (34) et que le système de détection détecte le parcours de transport des pièces (34) à travers la machine, un capteur (21) du système de détection se trouvant en position de base à l'extérieur du parcours de transport des pièces (34) et étant déplaçable transversalement au parcours de transport des pièces (34) depuis la position de base en direction d'une zone de mesure, de détection ou de surveillance.

2. Machine selon la revendication 1,
**caractérisée en ce que** le système de détection présente au moins une unité de capteur (8) et au moins une unité de réflecteur (9) comportant au moins un réflecteur (40) qui se font face en position de mesure, de détection ou de surveillance.

3. Machine selon la revendication 1 ou 2,
**caractérisée en ce que** l'unité de capteur (8) est disposée au niveau de la sortie de la machine (5), de préférence au niveau de l'extérieur de la machine.

4. Machine selon une des revendications 1 à 3,
**caractérisée en ce que** le capteur (21) se déplace dans la zone de mesure, de détection ou de surveillance jusqu'à une position terminale.

5. Machine selon une des revendications 1 à 4,
**caractérisée en ce que** le rayon de détection envoyé par le capteur (21) s'étend dans la zone de mesure, de détection ou de surveillance près d'un guide longitudinal (3) pour les pièces (34) dans la zone située au-dessus de la bande transporteuse (2).

6. Machine selon une des revendications 2 à 5,
**caractérisée en ce que** l'unité de capteur (8) présente au moins un commutateur (13) qui, en interaction avec des cames (31) et des arêtes de cames (26, 27) déplaçables par rapport à celui-ci, définit la position de base, la position terminale et la zone de mesure, de détection ou de surveillance du capteur (21).

7. Machine selon la revendication 6,
**caractérisée en ce que** les cames (31) et les arêtes de cames (26, 27) sont réglables dans le sens de déplacement du capteur (21) par rapport au commutateur (13).

8. Machine selon une des revendications 2 à 7,
**caractérisée en ce que** l'unité de réflecteur (9) est disposée à l'intérieur de la machine.

9. Machine selon une des revendications 2 à 8,
**caractérisée en ce que** la largeur mesurée dans le sens de déplacement du capteur (21) du réflecteur (40) est telle que le rayon de détection, pendant le déplacement dans la zone de mesure, de détection ou de surveillance, si le parcours de transport est libre, arrive sur le réflecteur (40).

10. Machine selon une des revendications 2 à 9,
**caractérisée en ce que** le réflecteur (40) est déplaçable depuis la position de base dans laquelle il se trouve en dehors du parcours de transport des pièces (34) vers la position de mesure, de détection ou de surveillance dans laquelle le réflecteur (40) se trouve à faible distance au-dessus de la bande transporteuse (2) .

11. Machine selon une des revendications 1 à 10,
**caractérisée en ce que** le système de détection présente au moins un émetteur et un récepteur qui se font face en position de mesure, de détection ou de surveillance et sont disposés à l'entrée ou à la sortie de la machine, se trouvent dans leur position de base en dehors du parcours de transport des pièces (34) et sont déplaçables vers la position de mesure, de détection ou de surveillance.

12. Procédé de surveillance du parcours de transport de pièces (34) usinées dans une machine selon une des revendications 1 à 11,
**caractérisé en ce qu'** un système de détection est déplacé depuis une position de base en dehors du parcours de transport des pièces (34) de manière à ce que le rayon de capteur s'étende dans le sens de transport des pièces (34) et détecte le parcours de transport des pièces (34) à travers la machine, qu'au moins un réflecteur (40) du système de détection est déplacé dans le parcours de transport des pièces (34) et qu'au moins un capteur (41) du système de détection est déplacé transversalement au parcours de transport des pièces (34) depuis la position de base en direction d'une zone de mesure, de détection ou de surveillance de manière à ce que le rayon de capteur, si le parcours de transport est libre, arrive sur le réflecteur (40) et soit réfléchi par celui-ci vers un récepteur du capteur (21).

13. Procédé selon la revendication 12,
**caractérisé en ce que** la mesure de surveillance est effectuée pendant que les broches fonctionnent.

14. Procédé selon la revendication 12 ou 13,
**caractérisé en ce que** le rayon de capteur est envoyé à proximité du guide longitudinal (3) à une faible distance au-dessus de la bande transporteuse (2) en direction du réflecteur (40).

15. Procédé selon une des revendications 12 à 14,
**caractérisé en ce que** le capteur (21), lors de l'entrée dans la zone de mesure, de détection ou de surveillance, si le parcours de transport est libre, est commuté et n'est pas commuté lors de la sortie hors de cette zone.
